# EUROPÄISCHE PATENTANMELDUNG

(11) **EP 2 055 501 A2**
(43) Veröffentlichungstag der Anmeldung: **06.05.2009**
(21) Anmeldenummer: 08018696.8
(22) Anmeldetag: 23.10.2008
(51) Int. Cl.: B42D 15/10, B42D 15/00

(54) **Verfahren zur Herstellung eines Sicherheitsmediums und Sicherheitsmedium**

(30) Priorität: 02.11.2007 DE 102007052477
(71) Anmelder: Klöckner Pentaplast GmbH & Co. KG, 56412 Heiligenroth (DE)
(72) Erfinder: Rau, Claus, 92536 Pfreimd (DE); Deiringer, Günther, Dr., 84556 Kastl (DE)
(74) Vertreter: Plate, Jürgen

(57) **Zusammenfassung**

Auf einem Träger 2, der nichtmagnetisch ist, wird ein flüssiges Beschichtungsmittel aufgetragen, in dem magnetische oder magnetisierbare Partikel 3 homogen verteilt sind. Der beschichtete Träger 2 wird durch ein inhomogenes bzw. definiert strukturiertes Magnetfeld 11 hindurchgeführt, das aus matrixartig angeordneten Permanent- oder Elektromagneten besteht, deren Nord-und Südpole gegeneinander versetzt sind. Die Elektromagnete werden selektiv elektrisch angesteuert, so dass es zeitlich variabel zu Umpolungen der Nord- und Südpole kommt, wodurch die magnetischen oder magnetisierbaren Partikel in dem Beschichtungsmittel definiert abgestoßen oder angezogen werden, in Teilbereichen des flüssigen Beschichtungsmittels konzentriert werden und magnetische und/oder optisch wirksame Muster bilden. Zuletzt wird das flüssige Beschichtungsmittel ausgehärtet und getrocknet, so dass die magnetischen Muster, die als Sicherheitsmerkmale dienen, in der auf dem Träger 2 zurückbleibenden Beschichtung 7 lagefixiert sind.

## Beschreibung

Die Erfindung betrifft ein Verfahren zur Herstellung eines Sicherheitsmediums, das auf einer Oberfläche eines nichtmagnetischen Trägers mit magnetisch wechselwirkenden Partikeln ausgestattet ist und ein Sicherheitsmedium.

Aus dem Sicherheitsmedium, das Sicherungsmerkmale aus magnetisch wechselwirkenden Partikeln enthält, werden Sicherheitsdokumente hergestellt, worunter ganz allgemein Dokumente zu verstehen sind, die neben verschiedenen Sicherheitselementen wie Hologrammen, Sicherheitsfäden, Mikrodrucke, Wasserzeichen, Laserbeschriftungen, Fluoreszenzpigmente, Hochprägungen, als zusätzliche Sicherungselemente die erwähnten Sicherungsmerkmale aus magnetisch wechselwirkenden Partikeln aufweisen. Die aufgezählten Sicherheitsmerkmale können sowohl einzeln als auch in Kombination eingesetzt werden. Derartige Echtheitsmerkmale machen Fälschungen schwieriger und/oder erleichtern das Erkennen von vorgenommenen Fälschungen. Bei den aus dem Sicherheitsmedium zu fertigenden Dokumenten und Belegen kann es sich um Amtsdokumente wie Personalausweise, Pässe, Führerscheine handeln, oder um Zahlungsmittel wie Schecks, Banknoten, Bankkarten, Kreditkarten oder ID (Identifizierung)-Karten für Sicherheitsbereiche, Gesundheits-Checkkarten, Telefonkarten, Herkunftsnachweise, Produktkennzeichnungen, Fahrscheine, Eintrittskarten, Aktien, Zertifikate, Etiketten, Verpackungen und dergleichen.

Zum Authentifizieren von Sicherheitsdokumenten, insbesondere von Geldnoten, ist es bekannt, Sicherheitsstreifen oder -fäden aus Kunststoff, die mit einer Metallschicht überdeckt sind, die im Vakuum aufgebracht oder aufgedruckt wird, in das Papier einzubringen. So sind Sicherheitsfäden aus Kunststoff, die eine magnetische Beschichtung aufweisen, beispielsweise aus den Druckschriften DE 16 96 245 und EP 0 310 707 A1 bekannt und haben sich als maschinenlesbare Sicherheitsmerkmale bewährt. Es sind auch Sicherheitsstreifen bekannt, die mit einer Schicht aus magnetischen Partikeln bedeckt sind. Durch magnetische Aufzeichnung können solche Sicherheitsstreifen kodierte Information empfangen oder nur in intermittierender Weise von Punkten aus magnetischen Partikeln bedeckt sein, die gedruckt und magnetisiert derart sind, dass sie einen Code darstellen.

In den Dokumenten US-A 4 941617 und EP 0 279 880 A1 sind transparente Fäden beschrieben, auf denen metallische Zeichen vorgegeben sind. Die metallischen Zeichen sind aufgrund ihrer reflektierenden Eigenschaften nach der Einbringung in das Papier im Auflicht kaum zu Erkennen, bei Betrachtung im Durchlicht dagegen hebt sich die Metallschicht in Form dunkler Zeichen von der hellen Umgebung ab.

Aus der EP 0330 733 B1 ist ein Sicherheitselement bekannt, das visuell und maschinell überprüfbar ist. Hierzu ist eine lichtdurchlässige Kunststofffolie metallisch beschichtet und diese Beschichtung mit Aussparungen in Form von Zeichen oder Mustern ausgerüstet. Zur Herstellung der Aussparungen, der sogenannten Negativschrift, wird vor der Metallisierung des Fadenmaterials ein Druckbild entsprechend der späteren Aussparungen aufgedruckt und erst im Anschluss daran die Metallbeschichtung aufgebracht. Für die Aufbringung des Druckbildes werden Druckfarben oder Lacke verwendet, die sich anschließend unter der Metallschicht wieder chemisch lösen lassen, so dass an den Stellen des Druckbildes Aussparungen in der Metallschicht entstehen, die an sich mit abgetragen wird.

Aus der EP 0 516 790 B1 ist gleichfalls ein Verfahren zur Herstellung eines Sicherheitselements in Form eines Fadens oder Bandes bekannt, das für die Einbringung in ein Sicherheitsdokument wie eine Banknote, Ausweiskarte oder dergleichen geeignet ist. Das Sicherheitselement besteht aus einem transparenten Trägermaterial, das eine metallische Schicht mit in Transmission lesbaren Aussparungen in Form von Zeichen, Mustern oder dergleichen aufweist. Hierzu wird die transparente Trägerfolie mit einer aktivierbaren Druckfarbe mit lesbaren Zeichen, Mustern oder dergleichen bedruckt, die Seite der Trägerfolie, welche die aktivierbare Druckfarbe trägt, vollflächig mit einer metallischen Schicht versehen, die Druckfarbe aktiviert um in der metallischen Beschichtung Aussparungen in Form der Zeichen, Muster oder dergleichen zu erzeugen, in partiellen Bereichen ein magnetischer Stoff aufgebracht und die Folie in Streifen entsprechender Breite geschnitten. Die Druckfarbe kann durch Laserstrahlung, Elektronenstrahlung, Temperaturbehandlung oder Druck aktiviert werden.

Aufgabe der Erfindung ist es ein Verfahren zur Herstellung eines Sicherheitsmediums und ein Sicherheitsmedium in Blatt- oder Bandform zu schaffen, das ein oder mehrere Sicherheitselemente aus magnetisch wechselwirkenden Partikeln enthält, die das Sicherheitsmedium und daraus gefertigte Sicherheitsdokumente individualisieren, wobei die magnetisch wechselwirkenden Partikel in Teilbereichen visuell und/oder magnetisch detektierbar sind.

Diese Aufgabe wird durch das eingangs beschriebene Verfahren erfindungsgemäß in der Weise gelöst, dass
(a) ein flüssiges Beschichtungsmittel, das magnetisierbare oder magnetische Partikel in homogener Verteilung enthält, auf die Oberfläche des Trägers aufgebracht wird,
(b) das flüssige Beschichtungsmittel auf dem Träger einem inhomogenen, zeitlich veränderlichen oder definiert strukturierten Magnetfeld ausgesetzt wird, das die homogene Verteilung der magnetisierbaren oder magnetischen Partikel aufhebt,
(c) das Magnetfeld inhomogene lokale Anhäufungen der Partikel in einem oder mehreren Teilbereichen des flüssigen Beschichtungsmittels erzeugt, und
(d) das flüssige Beschichtungsmittel getrocknet und verfestigt wird.

In Ausführung des Verfahrens wird der Anteil an magnetisierbaren oder magnetischen Partikeln in dem flüssigen Beschichtungsmittel 0,01 bis 80 Gew.-%, bezogen auf das Gewicht des flüssigen Beschichtungsmittels, gewählt. In bevorzugter Weise beträgt der Anteil an magnetisierbaren oder magnetischen Partikeln im flüssigen Beschichtungsmittel bis zu 0,1 Gew.-% und in weiterer Ausgestaltung der Erfindung bis zu 10,0 Gew.-%. Ferner kann der Anteil an magnetisierbaren oder magnetischen Partikeln in dem flüssigen Beschichtungsmittel 10 bis 80 Gew.-% betragen.

In Weiterbildung des Verfahrens wird das inhomogene oder definiert strukturierte Magnetfeld zeitlich veränderlich angelegt. In bevorzugter Weise werden die magnetisierbaren oder magnetischen Partikel aus pulverförmigen ferro- oder paramagnetischen Materialien in dem flüssigen Beschichtungsmittel homogen dispergiert. Dabei werden die ferromagnetischen Materialien aus der Gruppe Eisen, Cobalt, Nickel, Chrom, Oxide dieser Metalle, ferro magnetische Legierungen wie SrO:Fe₂O₃, AlNiCo, SmCo, Nd₂Fe₁₄B, NiFe, NiFeCo ausgewählt.

Insbesondere bestehen die Partikel aus Fe₃O₄ oder Fe₂O₃. Ferner sind auch paramagnetisch wirksame Metalle wie Aluminium, Alkalimetalle, seltenen Erden und deren Verbindungen verwendbar. Generell sind alle magnetisch wechselwirkenden Partikel verwendbar, die ferro-, para- oder ferrimagnetisches Verhalten, wie z. B. Magnetit (Fe₃O₄), zeigen.

In Weiterführung des Verfahrens wird das inhomogene oder definiert strukturierte Magnetfeld als Abfolge magnetischer Nord- und Südpole einer Vielzahl von einzelnen Magneten matrixartig aufgebaut. Dabei wird das inhomogene oder definiert strukturierte Magnetfeld eindimensional linienförmig oder zweidimensional flächenförmig ausgestaltet. Vorteilhafterweise sind die einzelnen Magnete als Permanentmagnete oder Elektromagnete ausgebildet und im Falle von Elektromagneten werden sie einzeln oder gruppenweise in zeitlicher Abfolge elektrisch angesteuert, um ein gezieltes, zeitlich variables Magnetfeld zu erzeugen.

In weiterer Ausgestaltung der Erfindung führt der matrixartige Aufbau der Magnete eine mechanische Bewegung in x- und y-Richtung aus.

Vorzugsweise wird das flüssige Beschichtungsmittel aus der Gruppe Polyamidharze, Acrylatharze, Ethylen-Vinylacetat Copolymere, hitzehärtbare Lacke auf Basis Polyester oder Polyethylen, UV-härtende Lacke, Hydrocellulose oder trocknende wässrige Dispersionen wie Druckfarben ausgewählt. Dabei wird das flüssige Beschichtungsmittel durch Siebdruck oder sonstige geeignete Auftragsverfahren wie Rakelantrag, Walzenantrag auf den Träger aufgebracht. Das Beschichtungsmittel kann anwendungs- und eigenschaftsbezogen weitere Additive wie Antiblockzusätze, Härter, Fließhilfsmittel, Farbmittel und dergleichen enthalten.

Das erfindungsgemäße Sicherheitsmedium, das einen nichtmagnetischen Träger und zumindest einen magnetisch wirksame Partikel enthaltenden Teilbereich aufweist, zeichnet sich dadurch aus, dass die magnetisch wirksamen Partikel in einer den Träger überdeckenden Beschichtung enthalten sind, dass die magnetischen Partikel ungleichmäßig oder definiert strukturiert in einem oder mehreren Teilbereichen verteilt sind und dass die magnetischen Partikel in einstellbaren magnetischen und optischen Mustern in dem oder den Teilbereich(en) fixiert sind.

Unter "magnetisch wechselwirkenden Partikeln" ist zu verstehen, dass die ferro-, para- oder ferrimagnetischen Partikeln in Wechselwirkung mit einem Magnetfeld und miteinander treten und entsprechend dem Magnetfeldverlauf, der Magnetfeldstärke und der Polausrichtung der einzelnen Teilchen sich unterschiedlich ausrichten und einander anziehen oder abstoßen. Die "magnetisch wirksamen" Partikel des Sicherheitsmediums besagen, dass die Partikel die Magnetfelder eines Messgerätes beeinflussen und dadurch die aus den Partikeln bestehenden Strukturen erfasst werden können.

Weiterbildungen des Sicherheitsmediums sind Gegenstand der Unteransprüche 10 bis 16.

Bei dem Sicherheitsmedium dienen magnetische Partikel, die in Strukturen wie Inschriften, Bildmustern, Linien, Flächenmustern, Dekor angeordnet sind, als Sicherheits- und Informationsmerkmale gegen Fälschungen. Da das Magnetfeld zur Erzeugung der Inhomogenität der in Teilbereichen angehäuften magnetischen Partikel variabel ansteuerbar ist, können die magnetischen Partikel in diesen Teilbereichen des Sicherheitsmediums auch als Personalisierungsmerkmale, beispielsweise zur Abbildung von Fingerabdrücken, verwendet werden. Aufgrund der hohen Gestaltungsmöglichkeiten des erfindungsgemäßen Verfahrens und der Fixierung der magnetischen Partikel innerhalb einer Beschichtung eines Trägers ist die Fälschungssicherheit sehr hoch. Der Zugang zu den Strukturen und somit der Versuch einer Fälschung kann nur durch eine Zerstörung der Beschichtung erfolgen und ist daher jederzeit leicht erkennbar.

Das Sicherheitsmedium wird in Blatt- oder Bahnform hergestellt und kann anschließend in Stücke vorgegebener Breite und Länge weiter konfektioniert werden, wobei jedes dieser Teilstücke eine entsprechende magnetische Struktur, wie zuvor beschrieben, enthält. Dadurch ist das Verfahren zur Herstellung des Sicherheitsmediums sehr rationell und das Sicherheitsmedium selbst kostengünstig herzustellen, da es nicht erforderlich ist auf jedes Einzelstück, aus dem Ausweis-, Scheck-, Kreditkarten, Personalausweise, Pässe und dergleichen gefertigt werden, solche magnetische Sicherheitsmerkmale aufzubringen.

Die Erfindung wird im Folgenden anhand der Zeichnungen näher erläutert. Es zeigen:
- Fig. 1: einen schematischen Verfahrensablauf zur Herstellung eines Sicherheitsmediums,
- Fig. 2: im Schnitt eine Teilansicht des Sicherheitsmediums,
- Fig. 3: in Draufsicht eine Sicherheitskarte mit einem Muster aus magnetischen Partikeln, gefertigt aus dem Sicherheitsmedium und
- Fig. 4: in Draufsicht ein Sicherheitsmedium mit wellenförmigem Verlauf der magnetischen Partikel.

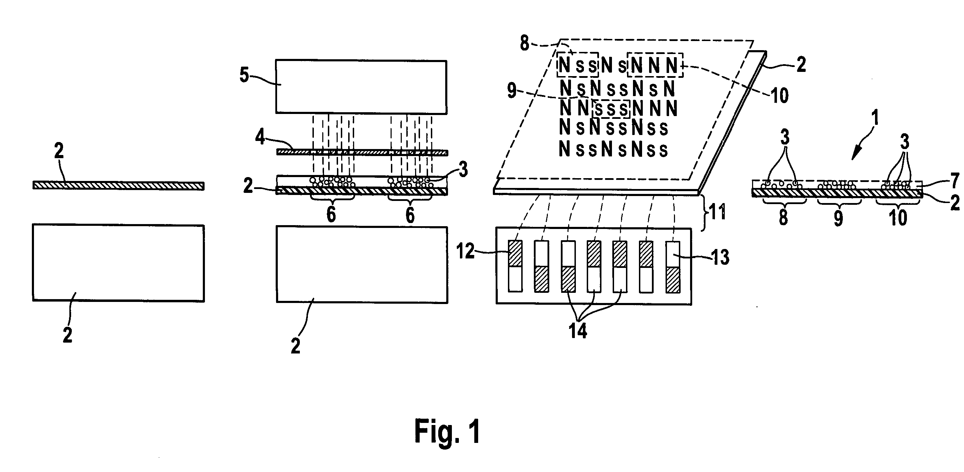

Der in Fig. 1 dargestellte schematische Verfahrensablauf zur Herstellung eines Sicherheitsmediums sieht einen Träger 2 vor, der in Drauf- und darüber in Seitenansicht gezeigt ist. Der Träger 2 besteht aus einem blatt- oder bahnförmigen Kunststoff aus einem Polymer, einem Laminat aus zwei oder mehr Kunststofflagen mit oder ohne weitere Lagen, die nicht aus Kunststoff bestehen, Papier, Pappe oder Glas. Wesentlich ist hierbei, dass das Material des Trägers 2 nicht magnetisch ist.

Der Träger 2 wird mit magnetischen oder magnetisierbaren Partikeln 3 homogen beschichtet. Dazu wird ein flüssiges Beschichtungsmittel, das die magnetisierbaren oder magnetischen Partikel 3 in homogener Verteilung enthält, auf die Oberfläche des Trägers 2 aufgebracht. Das flüssige Beschichtungsmittel kann eine Druckfarbe oder ein Lack sein und wird von einer Auftragsvorrichtung 5 im Siebdruck, wie gezeigt, wobei aber auch andere Auftragsverfahren wie Rakel- oder Walzenantrag anwendbar sind, durch ein Sieb 4 hindurch auf den Träger 2 aufgebracht. Das Beschichtungsmittel enthält die Partikel 3, die gleichmäßig über die Gesamtfläche des Trägers 2 in einem oder mehreren Teilbereichen 6 verteilt sind. Im nächsten Schritt wird das flüssige Beschichtungsmittel auf dem Träger 2 einem inhomogenen oder definiert strukturiertem Magnetfeld 11 ausgesetzt, das die homogene Verteilung der magnetisierbaren oder magnetischen Partikel 3 aufhebt. Das Magnetfeld erzeugt inhomogene oder strukturierte lokale Anhäufungen der Partikel in einem oder mehreren Teilbereichen des flüssigen Beschichtungsmittels. Das Magnetfeld 11 besteht aus matrixförmig angeordneten Magneten 14, die als Abfolge ihrer magnetischen Nordpole 12 und Südpole 13 das inhomogene oder definiert strukturierte Magnetfeld 11 erzeugen. Die einzelnen Magnete 14 sind als Permanentmagnete oder Elektromagnete ausgebildet, wobei die Elektromagnete einzeln oder gruppenweise in zeitlicher Abfolge elektrisch ansteuerbar sind, um ein gezieltes, zeitlich variables Magnetfeld zu erzeugen. Dabei wird das inhomogene oder definiert strukturierte Magnetfeld eindimensional linienförmig oder zweidimensional flächenförmig ausgestaltet. Durch die selektive Ansteuerung der matrixartig angeordneten Magnete 14, deren Nord- und Südpole durch die Ansteuerung umgepolt werden können, kommt es zu einer definierten Abstoßung oder Anziehung der magnetischen Partikel in dem flüssigen Beschichtungsmittel. Da die Viskosität des Beschichtungsmittels gering ist, können die Partikel Fließbewegungen ausführen und so Konzentrationsunterschiede hervorrufen.

Die magnetischen Strukturen können nicht nur durch ein zeitlich veränderliches Magnetfeld erzeugt werden. sondern auch durch eine Überlagerung eines fest vorgegebenen Magnetfeldes durch eine mechanische Bewegung in x-/y-Richtung des beschichteten Trägers, die oszillierend oder durch zwei aufeinander folgende lineare Bewegungen in x- und y-Richtung erfolgen kann. Ebenso können die magnetischen Strukturen durch eine mechanische x-/y-Bewegung des Magnetfeldes bzw. der Magnete-Matrix ober- oder unterhalb des Trägers erzeugt werden.

Bei Partikelgrößen im µm-Bereich, d.h. 1 µm und größer werden im Wesentlichen Hell/Dunkeleffekte bei der visuellen oder magnetischen Detektion der Magnetstrukturen erhalten. Derartige Sicherheitsmerkmale bzw. -effekte können durch die Auswahl kleinerer Partikelgrößen und -mengen so gesteuert werden, dass Wechselwirkungen zwischen den Partikeln und dem Licht im Wellenlängenbereich von etwa 400 bis 800 nm zu Farbeffekten führen.

Paramagnetische Partikel, wie z. B. Eisenoxid-Partikel, mit Partikelgrößen im Bereich von 50 bis 500 nm lagern sich je nach Stärke des Magnetfeldes zu einem photonischen Kristall zusammen. Bei diesen Kristallen handelt es sich um Nanostrukturen, welche die Bewegung von Photonen beeinflussen. Das Licht breitet sich infolge der spezifischen Nanostrukturen in der Größenordnung von einzelnen Wellenlängen aus, wodurch sich unterschiedliche schillernde Farben ergeben, je nach Stärke des angelegten Magnetfeldes. Magnetfeldstärkeänderungen verändern den Abstand zwischen den magnetischen Partikeln und damit auch die Farbe der Magnetstrukturen.

Die ungleichmäßige Verteilung der magnetischen Partikel liefert Strukturen wie Inschriften, Bildmuster, Linien, Flächenmuster, Dekors, Fingerabdrücke. Die magnetischen Partikel 3 werden somit in einstellbaren Mustern 8, 9, 10 in den Teilbereichen konzentriert. Die Muster 8-10 sind durch unterschiedliche Buchstabenkombinationen in Fig. 1 angedeutet. Im letzten Verfahrensschritt werden die magnetischen Muster 8,9,10 in der Beschichtung 7 fixiert, in dem das flüssige Beschichtungsmittel durch Wärme, chemische Reaktionen und/oder Strahlung ausgehärtet und getrocknet wird.

Die magnetisierbaren oder magnetischen Partikel aus pulverförmigen Materialien sind in dem flüssigen Beschichtungsmittel homogen dispergiert und beschichten den bahn- oder blattförmigen Träger 2. Das flüssige Beschichtungsmittel, das die Partikel homogen verteilt enthält, wird dem Magnetfeld 11 ausgesetzt, das die Homogenität der Verteilung stört und örtliche Konzentrationsunterschiede der Partikel hervorruft. Die Störung kann so eingestellt werden, dass die erwähnten gezielten magnetischen und optischen Muster entstehen. Nachdem der sehr schnelle Umlagerungsvorgang der Partikel abgeschlossen ist, wird das Beschichtungsmittel getrocknet und ausgehärtet, wodurch die magnetischen Muster fixiert werden. Mit dem Auge, einer Kamera oder Magnetfeld-Messgeräten können die Muster erfasst werden. Die spezielle Anordnung der Magnete zum Erzeugen des Magnetfeldes 11 besteht aus einer Vielzahl von Einzelmagneten 14, die entweder als Permanentmagnete dauerhaft eine vorgegebene Abfolge magnetischer Nord- oder Südpol-Ausrichtung der Partikel bewirken oder als Elektromagnete, deren elektrische Ansteuerung einzeln programmierbar ist, stark variable Strukturen der Partikel erzeugen können. Die durch die Magnetanordnung vorgegebenen Nordpole bzw. Südpole, stoßen die in ihrer nächsten Nähe befindlichen magnetischen oder magnetisierbaren Partikel 3 entweder ab oder ziehen sie an, so dass durch die Bewegung der Partikel Konzentrationsprofile derselben entstehen. Diese Konzentrationsprofile können gezielt durch das angelegte Magnetfeld beeinflusst werden. Die Partikel bestehen aus pulverförmigen ferro-, para- oder ferrimagnetischen Materialien aus der Gruppe Eisen, Kobalt, Nickel, Chrom, Oxide dieser Metalle, ferromagnetische Legierungen wie SrO:Fe₂O₃, AlNiCo, SmCo, Nd₂Fe₁₄B, NiFe, NiFeCo.
Bevorzugt bestehen die Partikel aus Fe₂O₃ oder Fe₃O₄. Weitere pulverförmige Materialien, aus denen die magnetisierbaren Partikel 3 bestehen sind Barium, Strontium, Kupfer und deren Metalloxide. Des weiteren sind auch paramagnetische Metalle wie Aluminium, Alkalimetalle, Seltenen Erden und deren Verbindungen verwendbar. Generell sind alle magnetisch wechselwirkenden Partikel verwendbar, die ferro-, para- oder ferrimagnetisches Verhalten, wie z. B. Magnetit (Fe₃O₄) zeigen.

Für sehr feine Linien bzw. Strukturen der magnetischen Partikel ist die Größe der einzelnen Partikel <1 µm oder < 5 µm. Des weiteren liegt die Größe der Partikel zwischen 10 und 30 µm.

Der Anteil an magnetisierbaren oder magnetischen Partikeln 3 in dem flüssigen Beschichtungsmittel beträgt 0,01 bis 80 Gew.-%, bezogen auf das Gewicht des flüssigen Beschichtungsmittels. In Ausgestaltung des Verfahrens beträgt der Anteil an magnetisierbaren oder magnetischen Partikeln in dem flüssigen Beschichtungsmittel bis zu 0,1 Gew.-% , insbesondere bis zu 10 Gew.-%. Des weiteren kann der Anteil an magnetisierbaren oder magnetischen Partikeln in dem flüssigen Beschichtungsmittel 10 bis 80 Gew.-% betragen.

Die Partikel haben eine mittlere Größe von 0,05 bis 60 µm, insbesondere von 1 bis 5 µm. Für sehr feine Strukturen ist die Partikelgröße kleiner 1 µm. Weitere bevorzugte Größen der Partikel sind kleiner 5 µm und 20 bis 30 µm.

Das flüssige Beschichtungsmittel wird aus der Gruppe Polyamidharze, Acrylatharze, Ethylen-Vinylacetat-Copolymere, hitzehärtbare Lacke auf Basis Polyester oder Polyethylen, UV-härtende Lacke, Hydrocellulose oder trocknende wässrige Dispersionen ausgewählt. Es ist auch möglich Druckfarbe, die magnetisierbare Partikel enthält, auf den Träger aufzubringen.

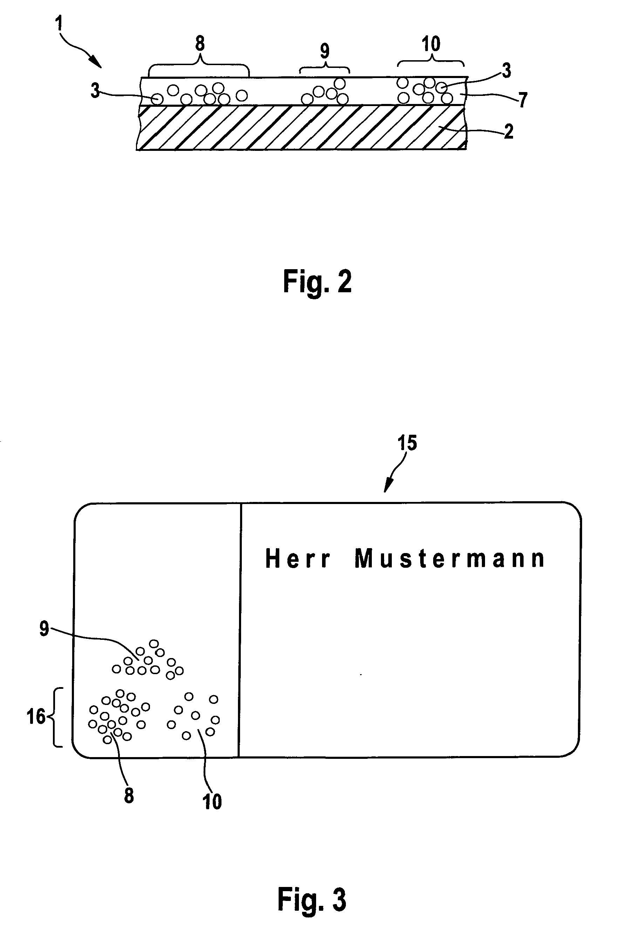

Fig. 2 zeigt im Schnitt eine Teilansicht des Sicherheitsmediums 1. Auf dem Träger 2 bzw. dem Substrat des Sicherheitsmediums befindet sich die gehärtete Beschichtung 7, die über ihre Dicke verteilt magnetische Partikel 3 enthält. Diese magnetischen Partikel 3 sind in Mustern 8, 9, 10 angeordnet und innerhalb der Beschichtung 7 lagefixiert. Das Sicherheitsmedium 1 dient als Ausgangsmaterial für die Fertigung fälschungssicherer Scheck-, Kredit-, Telefon-, Gesundheits-Checkkarten, Personalausweisen, Pässen, Herkunftsnachweisen, Sicherheitsbelegen, Produktkennzeichnungen, Fahrscheinen, Eintrittskarten, Aktien, Zertifikaten, Etiketten, Verpackungen und dergleichen.

In Fig. 3 ist in Draufsicht eine Sicherheitskarte 15 gezeigt, die im linken Bereich Muster 8, 9, 10 enthält. Das Muster 8 bildet in einem Teilbereich eine magnetische Kodierung 16. Das gleiche gilt in den übrigen zwei Teilbereichen für die Muster 9 und 10. Bei dem erfindungsgemäßen Verfahren werden in dem flüssigen Beschichtungsmittel die homogen verteilten magnetisierbaren oder magnetischen Partikel vor dem Trocknen der Beschichtungsflüssigkeit einer definierten Inhomogenisierung bzw. Konzentrationsverteilung unterzogen. Die in Teilbereichen der Beschichtungsflüssigkeit erzeugten Muster werden nach dem Aushärten und Trocknen der Beschichtungsflüssigkeit in der zurückbleibenden Beschichtung lagefixiert und dienen als Sicherheits- oder Informationsmerkmal. Die Struktur bzw. die magnetische Information wird durch die variabel ansteuerbare Magnetanordnung zur Erzeugung des Magnetfeldes, das die Inhomogenität der magnetischen Partikel innerhalb der Beschichtung bewirkt, zu einem Personalisierungsmerkmal, beispielsweise derart, dass Fingerabdrücke nachgebildet werden können.

In Ausführungsbeispielen der Erfindung besteht der Träger 2 aus einer PVC- oder PET-Folie, die transparent ist und eine Dicke von 100 µm hat. Das flüssige Beschichtungsmittel ist ein kratzfester Lack auf Basis eines Acrylatharzes. Die magnetisierbaren oder magnetischen Partikel 3 bestehen aus Fe₃O₄ und ihr Anteil beträgt 0,1, 5,0 oder 30 Gew.-% in dem flüssigen Beschichtungsmittel, bezogen auf die Gesamtmenge bzw. das Gesamtgewicht des Beschichtungsmittels. Zur Erzeugung des Magnetfeldes 11 werden vier kleine Permanentmagnete verwendet, die unter oder über der bahnförmigen PVC- oder PET-Folie angeordnet sind. Es entstehen in dem flüssigen Beschichtungsmittel helle/dunkle Bereiche, die je nach Kombination der Nord- und Südpole der 4 Permanentmagnete unterschiedliche Strukturen ergeben. Die anschließende Trocknung des flüssigen Beschichtungsmittels hat keinen Einfluss auf die erzeugten Strukturen der Partikel, sondern fixiert diese nur in ihrer Lage innerhalb der Beschichtung 7.

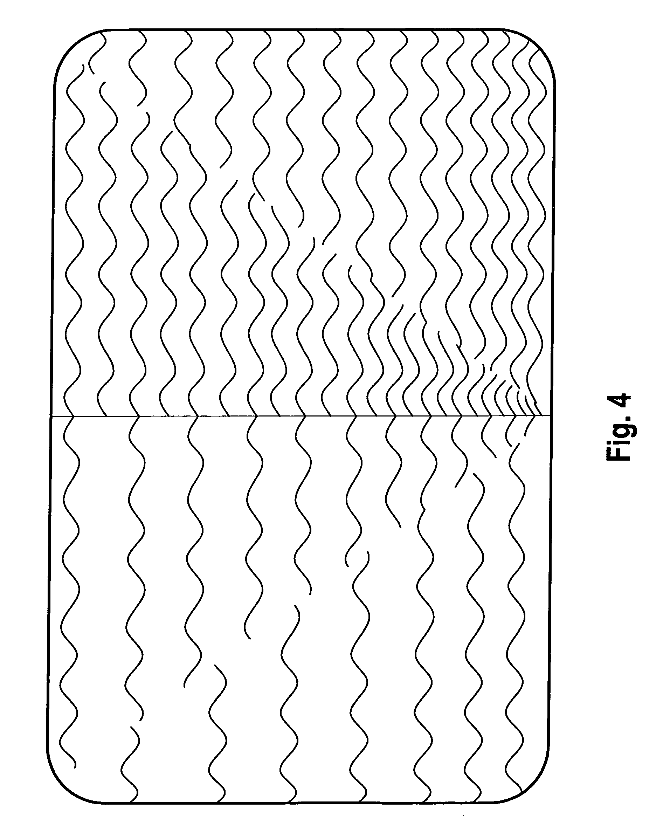

Dem stationären definierten Magnetfeld der Permanentmagnete wird eine mechanische Bewegung in x-/y-Richtung des Trägers 2 überlagert, wodurch wellenförmige Strukturen der Partikel erhalten werden, wie in Fig. 4 gezeigt ist. Durch Änderungen der Magnetfeldstärke, indem stärkere Permanentmagnete oder elektrisch ansteuerbare Elektromagnete eingesetzt werden, ändert sich die Farbe der wellenförmigen Strukturen auf dem Träger von beispielsweise hellbraun nach dunkelbraun bis schwarz.

### Bezugszeichenliste

- 1 =: Sicherheitsmedium
- 2 =: Träger
- 3 =: magnetische oder magnetisierte Partikel
- 4 =: Sieb
- 5 =: Lackauftragsvorrichtung
- 6 =: Teilbereiche
- 7 =: Beschichtung
- 8, 9, 10 =: magnetische Muster
- 11 =: Magnetfeld
- 12 =: Nordpol
- 13 =: Südpol
- 14 =: Magnete
- 15 =: Sicherheitskarte
- 16 =: Kodierung

## Patentansprüche

1. Verfahren zur Herstellung eines Sicherheitsmediums (1), das auf einer Oberfläche eines nichtmagnetischen Trägers (2) mit magnetisch wechselwirkenden Partikeln ausgestattet ist, **dadurch gekennzeichnet, dass**
(a) ein flüssiges Beschichtungsmittel, das magnetisierbare oder magnetische Partikel (3) in homogener Verteilung enthält, auf die Oberfläche des Trägers (2) aufgebracht wird,
(b) das flüssige Beschichtungsmittel auf dem Träger (2) einem inhomogenen, zeitlich veränderlichen oder definiert strukturieren Magnetfeld ausgesetzt wird, das die homogene Verteilung der magnetisierbaren oder magnetischen Partikel aufhebt,
(c) das Magnetfeld inhomogene lokale Anhäufungen der Partikel in einem oder mehreren Teilbereichen des flüssigen Beschichtungsmittels erzeugt, und
(d) das flüssige Beschichtungsmittel durch Wärme, chemische Reaktionen und/oder Strahlung ausgehärtet und getrocknet wird.

2. Verfahren nach Anspruch 1, **dadurch gekennzeichnet, dass** der Anteil an magnetisierbaren oder magnetischen Partikeln in dem flüssigen Beschichtungsmittel 0,01 bis 80 Gew.-%, bis zu 0,1 Gew.-%, bis zu 10 Gew.-% oder 10 bis 80 Gew.-%, jeweils bezogen auf das Gewicht des flüssigen Beschichtungsmittels, gewählt wird.

3. Verfahren nach Anspruch 1, **dadurch gekennzeichnet, dass** die magnetisierbaren oder magnetischen Partikel aus pulverförmigen ferromagnetischen Materialien, ausgewählt aus der Gruppe Eisen, Cobalt, Nickel, Chrom, Oxide dieser Metalle, ferromagnetische Legierungen wie SrO:Fe₂O₃, AlNiCo, SmCo, Nd₂Fe₁₄B, NiFe, NiFeCo, oder para- oder ferrimagnetischen Materialien in dem flüssigen Beschichtungsmittel homogen dispergiert werden.

4. Verfahren nach Anspruch 3 **dadurch gekennzeichnet, dass** die Partikel aus Fe₃O₄ oder Fe₂O₃ bestehen.

5. Verfahren nach Anspruch 1, **dadurch gekennzeichnet, dass** die magnetisierbaren Partikel aus pulverförmigen Materialien wie Barium, Strontium, Kupfer und deren Metalloxiden ausgewählt werden.

6. Verfahren nach Anspruch 1, **dadurch gekennzeichnet, dass** das inhomogene oder definiert strukturierte Magnetfeld als Abfolge magnetischer Nord- und Südpole einer Vielzahl von einzelnen Magneten matrixartig aufgebaut und eindimensional linienförmig oder zweidimensional flächenförmig ausgestaltet wird, wobei die einzelnen Magnete als Permanentmagnete oder Elektromagnete ausgebildet sind und die Elektromagnete einzeln oder gruppenweise in zeitlicher Abfolge elektrisch angesteuert werden, um ein gezieltes, zeitlich variables Magnetfeld zu erzeugen und gegebenenfalls der matrixartige Aufbau der Magnete eine mechanische Bewegung in x- und y-Richtung ausführt.

7. Verfahren nach Anspruch 1, **dadurch gekennzeichnet, dass** der Träger (2) bei fest vorgegebenem Magnetfeld eine mechanische oszillierende Bewegung oder zwei aufeinanderfolgende lineare Bewegungen, jeweils in x- und y-Richtung, ausführt.

8. Verfahren nach Anspruch 1, **dadurch gekennzeichnet, dass** das flüssige Beschichtungsmittel aus der Gruppe Polyamidharze, Acrylatharze, Ethylen-Vinylacetat Copolymere, hitzehärtbare Lacke auf Basis Polyester oder Polyethylen, UV-härtende Lacke, Hydrocellulose oder trocknende wässrige Dispersionen wie Druckfarben ausgewählt wird und durch Siebdruck, Rakel-, Walzenantrag oder sonstige geeignete Beschichtungsverfahren auf den Träger aufgebracht wird.

9. Sicherheitsmedium, das einen nichtmagnetischen Träger (2) und zumindest einen magnetisch wirksame Partikel (3) enthaltenden Teilbereich (6) aufweist, **dadurch gekennzeichnet, dass**
die magnetisch wirksamen Partikel in einer den Träger (2) überdeckenden Beschichtung (7) enthalten sind, dass
die magnetisch wirksamen Partikel ungleichmäßig oder definiert strukturiert in einem oder mehreren Teilbereichen (6) verteilt sind, und dass
die magnetischen Partikel in einstellbaren magnetischen und optischen Mustern (8, 9,10) in dem oder den Teilbereich(en) fixiert sind.

10. Sicherheitsmedium nach Anspruch 9, **dadurch gekennzeichnet, dass** der Anteil der magnetischen Partikel in dem oder in den Teilbereichen (6) der Beschichtung (7) 0,01 bis 80 Gew.-%, bis zu 0,1 Gew.-%, bis zu 10 Gew.-%, 10 bis 80 Gew.-%, jeweils bezogen auf das Flüssiggewicht des Beschichtungsmittels, beträgt.

11. Sicherheitsmedium nach Anspruch 9, **dadurch gekennzeichnet, dass** die magnetischen Partikel aus einem pulverförmigen ferromagnetischen Material, ausgewählt aus der Gruppe Eisen, Cobalt, Nickel, Chrom, Oxiden dieser Metalle, ferromagnetische Legierungen wie SrO:Fe₃O₄, AlNiCo, SmCo, Nd₂F₁₄B, NiFe, NiFeCo, oder para- oder ferrimagnetischen Materialien bestehen.

12. Sicherheitsmedium nach Anspruch 11, **dadurch gekennzeichnet, dass** die Partikel aus Fe₃O₄ oder Fe₂O₃ sind.

13. Sicherheitsmedium nach Anspruch 9, **dadurch gekennzeichnet, dass** die Partikel eine mittlere Größe von 0,05 bis 60 µm, insbesondere kleiner 1 µm, 1 bis 5 µm oder 10 bis 30 µm haben.

14. Sicherheitsmedium nach Anspruch 9, **dadurch gekennzeichnet, dass** der Träger (2) ein blatt- oder bahnförmiger Kunststoff aus einem Polymer, ein Laminat aus zwei oder mehr Kunststofflagen mit oder ohne weitere Lagen, die nicht aus Kunststoff bestehen, Papier, Pappe, oder Glas ist und dass die Beschichtung (7) ein Polyamidharz, ein Acrylatharz, Ethylen-Vinylacetat Copolymer, ein hitzehärtbarer Lack auf Basis Polyester oder Polyethylen,UV-härtender Lack, Hydrocellulose oder eine trocknende wässrige Dispersion ist.

15. Sicherheitsmedium nach einem der Ansprüche 9 bis 14, **dadurch gekennzeichnet, dass** die Partikel in den Mustern (8, 9, 10) Hell/Dunkelbereich oder unterschiedliche Farbbereiche, in Abhängigkeit von den Partikelgrößen und -mengen und deren gleich- oder ungleichmäßigen Verteilung, bilden, dass die magnetischen Partikel in einem oder mehreren Teilbereichen eine magnetische Kodierung (10) aufweisen und dass die ungleichmäßige Verteilung der magnetischen Partikel Strukturen wie Inschriften, Bildmuster, Linien, Flächenmuster, Dekors, Fingerabdrücke darstellt.

16. Sicherheitsmedium nach einem der Ansprüche 9 bis 15, **dadurch gekennzeichnet, dass** es das Ausgangsmaterial für die Fertigung fälschungssicherer Scheckkarten, Kreditkarten, Telefonkarten, Personalausweisen, Pässen, Herkunftsnachweisen, Sicherheitsbelegen, Produktkennzeichnungen, Gesundheits-Checkkarten, Fahrscheinen, Eintrittskarten, Aktien, Zertifikaten, Etiketten, Verpackungen bildet.
